# EUROPEAN PATENT APPLICATION

(11) **EP 4 656 025 A1**
(43) Date of publication of application: **03.12.2025**
(21) Application number: 25169757.9
(22) Date of filing: 10.04.2025
(51) Int. Cl.: A01B 69/04

(54) **GUIDING AN AGRICULTURAL VEHICLE USING REINFORCEMENT LEARNING**

(30) Priority: 30.05.2024 US 202463653348 P; 31.07.2024 US 202463677688 P
(71) Applicant: AGCO International GmbH, 8212 Neuhausen am Rheinfall (CH)
(72) Inventor: ZHOU, Kun, 8930 Randers (DK); NILSSON, Rene, DK8900 Randers (DK); LAUSDAHL, Kenneth, DK8900 Randers (DK); BECH, Søren, DK8900 Randers (DK); LUND, Jens, DK8900 Randers (DK); Lyng, Ran Sun, Randers (DK)
(74) Representative: AGCO Intellectual Property Department

(57) **Abstract**

A mechanism for generating a recommended route for an agricultural vehicle in advance of performing an agricultural process. The mechanism further includes tracking adherence of the agricultural vehicle to the recommended route and/or controlling the vehicle to follow the recommended route. The recommended route is generated responsive to the classification(s) of one or more segments of a boundary of a predetermined region in which the agricultural process is to be performed.

## Description

### FIELD

Embodiments of the present disclosure relate to agricultural vehicles, and in particular to guiding an agricultural vehicle.

### BACKGROUND

With ever-increasing population numbers and an ongoing interest in more environmentally friendly farming practices, there is a desire to improve the efficiency of performing agricultural processes. Examples of agricultural processes include ploughing, planting, spraying, fertilizing, harvesting and so on. Each of these activities plays a distinct role in the overall agricultural production cycle and their efficiency directly impacts the productivity and sustainability of farming operations.

Typically, during performance of one or more agricultural processes by an agricultural vehicle, there are a number of decisions that need to be made by an operator, including at least a travel direction of and/or a route taken by the agricultural vehicle. The decisions made by the operator will influence and/or affect the performance and/or efficiency of the agricultural process(es) carried out by the agricultural vehicle.

As an example, for performing one or more agricultural processes, there may be a desire to perform field coverage and/or route planning. Field coverage/route planning in the context of agricultural machines/vehicles refers to the process of ensuring that an entire agricultural region/field treated or processed by a vehicle/machine without missing any areas or unnecessarily overlapping previously covered areas. This is useful for various agricultural operations to ensure uniformity, efficiency, and improved/optimal use of resources. Traditional algorithms for the field coverage problem includes e.g., graph-based methods or grid-based algorithms. These algorithms are deterministic and are based on well-defined and rigid rules and patterns.

There is an ongoing desire to improve the performance and efficiency of conducting one or more agricultural processes using an agricultural vehicle.

### BRIEF SUMMARY

According to examples in accordance with this disclosure, there is provided an agricultural system, comprising: an agricultural vehicle; and a guidance system configured to control one or more operations of the agricultural vehicle and comprising: at least one processor; and at least one non-transitory computer-readable storage medium storing instructions thereon that, when executed by the at least one processor, cause the guidance system to: obtain a guidance reinforcement learning model configured to generate guidance information for guiding the agricultural vehicle through one or more agricultural processes in a predetermined agricultural region; guide the agricultural vehicle through one or more agricultural processes in the predetermined agricultural region using the guidance reinforcement learning model; receive one or more inputs of feedback grading one or more actions taken by the guidance system and/or the agricultural vehicle while the guidance system guides the agricultural system through the one or more agricultural processes; and adjust the guidance reinforcement learning model responsive to the received one or more inputs of feedback.

*The present disclosure provides an approach in which a reinforcement learning model is used to guide the performance of one or more agricultural processes performed by an agricultural vehicle (e.g., guide a travel direction and*/*or route taken). The proposed approach thereby makes use of a reward-based system for generating guidance information, facilitating the prioritization of certain outcomes when generating the guidance information. This can be exploited to achieve more resource and*/*or time efficient performance of the agricultural process(es). Moreover, the proposed mechanism is adaptive to a current state or condition of the agricultural process(es) and*/*or agricultural vehicle, leading to more responsive and adaptive guidance of the agricultural vehicle.*

*Embodiments are based on the realization that reinforcement learning (RL) offers a dynamic and adaptive approach to solving problems, making it particularly suitable for tasks like guiding the performance of an agricultural process (e.g., performing field coverage) where the environment can be complex and variable.*

The instructions may be configured to, when executed by the at least one processor, cause the guidance control system to guide the agricultural vehicle through the one or more agricultural processes in the predetermined agricultural region by performing a guidance process comprising: using the guidance reinforcement learning model to generate the guidance information for performing the one or more agricultural processes; and using the guidance information to guide the agricultural vehicle through the one or more agricultural processes in the predetermined agricultural region.

The agricultural system may further comprise an output user interface, wherein the guidance process comprises controlling the output user interface to provide a user-perceptible output of the guidance information. *This provides a human-machine interface for facilitating the guidance of performing the agricultural process, which guidance is updated responsive to changes in the condition(s) of the agricultural vehicle and*/*or agricultural process(es).*

The output user interface may comprise an output display and the user-perceptible output comprises a visual representation of the guidance information. *This provides an intuitive approach for providing or delivering the guidance information to an individual or operator of the agricultural vehicle.*

The guidance process may comprise controlling the one or more operations of the agricultural vehicle during the one or more agricultural processes. *In this way, the agricultural vehicle can be automatically or autonomously controlled using the guidance information, to significantly reduce a burden on any operator of the agricultural vehicle.*

The one or more operations may comprise at least a steering operation of the agricultural vehicle. *In this way, the movement of the agricultural vehicle can be performed automatically.*

The guidance information may indicate one or more recommended actions for the agricultural vehicle. The guidance reinforcement learning model may be configured to process state information, representing a state of the agricultural vehicle and/or the predetermined agricultural region, to generate the guidance information.

The state information may comprise environment parameters comprising one or more of field layout data, obstacle data, soil condition data, crop distribution data, terrain and/or topography data, start and end point data, weather condition data, or time restriction data. *This provides information that contextualizes an environment in which the agricultural vehicle is positioned, for appropriate and more accurate identification of the state of the agricultural vehicle.*

The state information may comprise vehicle information comprising one or more of: previous coverage data; machine characteristic data; position information; historic position information and/or a fuel level. *This can provide dynamic information that indicates a change in the state resultant from the performance of the agricultural process(es) to improve the accuracy and relevant of the guidance information.*

The vehicle information may comprise at least the position information. *This provides an approach suited for tracking and updating the guidance information based on a movement of the agricultural vehicle, which is particularly suited for route planning implementations.*

The guidance reinforcement learning model may comprise at least one of a Q-learning model, a Deep Q Networks (DQN) model, a Proximal Policy Optimization (PPO) model and/or an Actor-Critic model. *These provide suitable examples of reinforcement learning models that are capable and adaptable for use in generating guidance information for the agricultural vehicle.*

The instructions may be configured to, when executed by the at least one processor, cause the guidance control system to obtain the guidance reinforcement learning model by performing a training process comprising training the guidance reinforcement learning model via one or more simulated agricultural processes within one or more simulated agricultural regions. *In this way, the guidance control system may generate and*/*or train the guidance reinforcement learning model by simulation before deployment. This significantly reduces a burden on training on real-life data, saving significant resource to produce the guidance reinforcement learning model.*

The training process may comprise performing one or more iterations of: guiding a simulated agricultural vehicle through one or more simulated agricultural processes in one or more simulated agricultural regions using the guidance reinforcement learning model; receiving one or more second inputs of feedback grading one or more actions taken by the guidance system and/or the simulated agricultural vehicle while the guidance system guides the simulated agricultural system through the one or more simulated agricultural processes in the simulated region; and adjusting the guidance reinforcement learning model responsive to the received one or more second inputs of feedback.

The one or more simulated agricultural regions may comprise a simulated agricultural region modelled after the predetermined agricultural region, e.g., only the simulated agricultural region modelled after the predetermined agricultural region.

In some examples, the one or more inputs of feedback comprises one or more of: positive feedback for covering a new part of the agricultural region, negative feedback for overlapping previously covered areas of the agricultural region, negative feedback for missing areas of the agricultural region, negative or positive feedback for fuel consumption during an agricultural process, and/or negative or positive feedback for time taken to perform an agricultural process.

The agricultural system may comprise one or more of: at least one input interface for receiving at least one input of feedback; at least one vehicle sensor for generating vehicle sensor data identifying one or more inputs of feedback responsive to a property of the agricultural vehicle; and/or at least one region sensor for generating region sensor data identifying one or more inputs of feedback responsive to a property of predetermined agricultural region.

In some examples, the guidance information indicates a recommended route for the agricultural vehicle during the performance of the one or more agricultural processes within the predetermined agricultural region.

*In this way, the guidance reinforcement learning method can be configured for solving a problem of route planning and*/*or field coverage, e.g., dependent upon the type of feedback employed.*

*Reinforcement Learning (RL) for resolving the route problem of agricultural machines involves training an agent to find the most efficient path to cover a field while performing agricultural tasks, such as planting, spraying, or harvesting. The goal may be to maximize field coverage efficiency, minimize overlaps or missed areas, and*/*or reduce resource consumption (like fuel or time), e.g., dependent upon the feedback employed.*

There is also provided a computer-implemented method for guiding an agricultural vehicle through one or more agricultural processes in a predetermined agricultural region.

The computer-implemented method comprises: obtaining a guidance reinforcement learning model configured to generate guidance information for guiding the agricultural vehicle through the one or more agricultural processes in the predetermined agricultural region; guiding the agricultural vehicle through one or more agricultural processes in the predetermined agricultural region using the guidance reinforcement learning model; receiving one or more inputs of feedback grading one or more actions taken by the guidance system and/or the agricultural vehicle while the guidance system guides the agricultural system through the one or more agricultural processes; and adjusting the guidance reinforcement learning model responsive to the received one or more inputs of feedback.

The skilled person would be readily capable of modifying any herein disclosed computer-implemented method to perform the function(s) of any herein disclosed guidance system and vice versa.

### BRIEF DESCRIPTION OF THE DRAWINGS

One or more embodiments of the disclosure will now be described, by way of example only, with reference to the accompanying drawings, in which:
FIG. 1 illustrates a system in which embodiments may be employed.
FIG. 2 is a flowchart illustrating a proposed method.
FIG. 3 illustrates a schematic representation of an example model that can be utilized as a guidance reinforcement learning model.
FIG. 4 illustrates a act for use in a proposed method.

### DETAILED DESCRIPTION

It should be understood that the detailed description and specific examples, while indicating exemplary embodiments of the apparatus, systems and methods, are intended for purposes of illustration only and are not intended to limit the scope of the disclosure. These and other features, aspects, and advantages of the apparatus, systems and methods of the present disclosure will become better understood from the following description, appended claims, and accompanying drawings. It should be understood that the Figures are merely schematic and are not drawn to scale. It should also be understood that the same reference numerals are used throughout the Figures to indicate the same or similar parts.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used.

As used herein, the terms "comprising," "including," "containing," "characterized by," and grammatical equivalents thereof are inclusive or open-ended terms that do not exclude additional, unrecited elements or method acts, but also include the more restrictive terms "consisting of" and "consisting essentially of" and grammatical equivalents thereof.

As used herein, the singular forms following "a," "an," and "the" are intended to include the plural forms as well, unless the context clearly indicates otherwise.

As used herein, the term "may" with respect to a material, structure, feature, or method act indicates that such is contemplated for use in implementation of an embodiment of the disclosure, and such term is used in preference to the more restrictive term "is" so as to avoid any implication that other compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, any relational term, such as "first," "second," "top," "bottom," "upper," "lower," "above," "beneath," "side," "outer," "inner," etc., is used for clarity and convenience in understanding the disclosure and accompanying drawings, and does not connote or depend on any specific preference or order, except where the context clearly indicates otherwise. For example, these terms may refer to an orientation of elements as illustrated in the drawings. Additionally, these terms may refer to an orientation of elements of the disclosure when utilized in a conventional manners.

As used herein, the term "substantially" in reference to a given parameter, property, or condition means and includes to a degree that one skilled in the art would understand that the given parameter, property, or condition is met with a small degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter, as well as variations resulting from manufacturing tolerances, etc.).

As used herein, the term "and/or" includes any and all combinations of one or more of the associated listed items

This disclosure relates to a mechanism for generating guidance information for guiding an agricultural vehicle through one or more agricultural processes within an agricultural region. The guidance information is generated using a guidance reinforcement learning model. The model is updated or modified responsive to one or more inputs of feedback received during performance of the agricultural process(es).

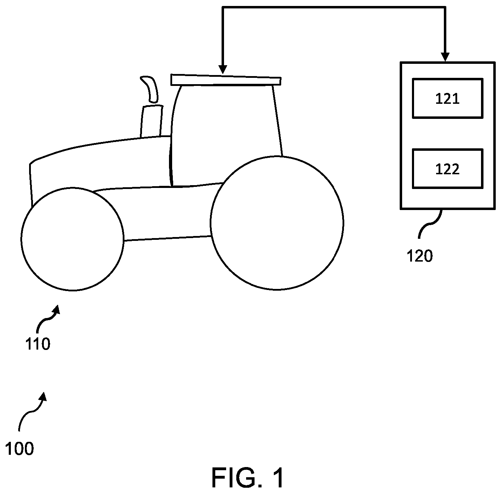

FIG. 1 conceptually illustrates a proposed agricultural system 100 in which embodiments may be employed.

The agricultural system 100 comprises an agricultural vehicle 110 (here: embodied as a tractor) and a guidance system 120. Although illustrated as separate elements for the sake of illustrative clarity, in some examples, the guidance system 120 is carried by or mounted to the agricultural vehicle 110. In alternative examples, the guidance system 120 is separate/remote from the agricultural vehicle (e.g., hosted by a cloud-computing network/system or the like).

The agricultural vehicle 110 is configured to perform one or more agricultural processes. Examples of agricultural processes include ploughing, planting, spraying, fertilizing, harvesting and so on. These may be performed in an agricultural region, such as one or more fields or horticultural regions (e.g., a greenhouse space). The agricultural vehicle 110 is a self-propelling device that may be controlled autonomously and/or manually, e.g., responsive to an operator's input.

The guidance system 120 is configured to control one or more operations of the agricultural vehicle, examples of which are provided later in this disclosure.

The present disclosure proposes adapting the guidance system 120 to guide the performance of the one or more agricultural processes of the agricultural vehicle (within a predetermined agricultural region) using a guidance reinforcement learning model. It is proposed to update or modify the guidance reinforcement learning model responsive to feedback about the action(s) taken by the agricultural vehicle and/or the guidance system during the performance of the agricultural process(es). The feedback may indicate, for instance, an effect of the action(s) on the agricultural region, the agricultural vehicle and/or the outcome of the agricultural process(es).

The guidance system 120 comprises at least one processor 121; and at least one non-transitory computer-readable storage medium 122 storing instructions thereon that, when executed by the at least one processor, cause the guidance system to perform a herein disclosed method (i.e., to guide the performance of the one or more agricultural processes).

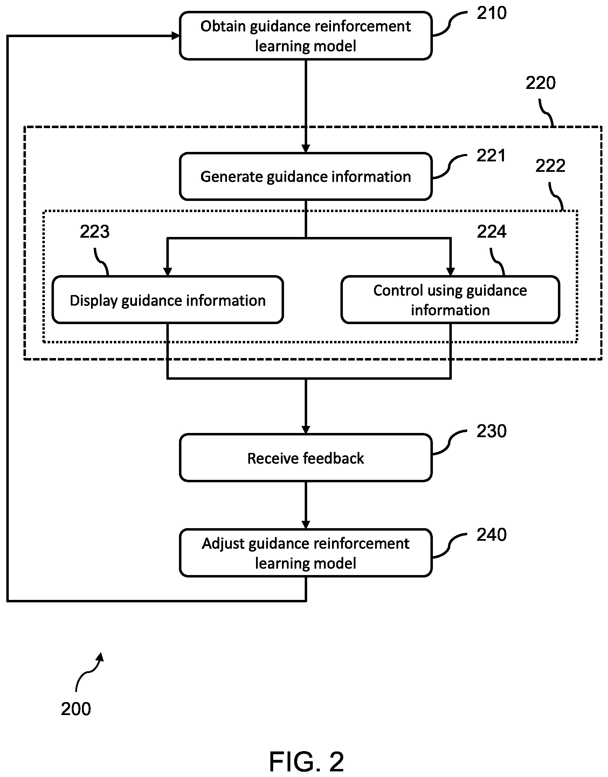

FIG. 2 is a flowchart illustrating a proposed computer-implemented method 200. The method 200 is performed by the guidance system. More specifically, the method 200 is performed by the guidance system when the at least one processor of the guidance system executes appropriate instructions stored by the at least one non-transitory computer-readable storage medium.

The method 200 comprises a act 210 of obtaining a guidance reinforcement learning model. The guidance reinforcement learning model functions as an agent, being the "brain" or decision-making system that functions to guide the agricultural vehicle.

The guidance reinforcement learning model is configured to generate guidance information for guiding the agricultural vehicle through one or more agricultural processes in a predetermined agricultural region.

By way of example, the guidance information may indicate one or more recommended actions for the agricultural vehicle. The recommended action(s) may be a recommended action for conducting or performing the agricultural process(es) by the agricultural vehicle. More particularly, the recommended action(s) may be a recommended operation to be performed by the agricultural vehicle. The skilled person will appreciate that the type and format of the recommended action(s) will be at least partially dependent upon the agricultural process(es) to be performed and/or the capabilities or functionality of the agricultural vehicle.

By way of example, the guidance information may indicate a recommended direction for the agricultural vehicle. In this way, the guidance information is able to recommend a movement for the agricultural device.

As another example, the guidance information may be a recommended action for performing a act of an agricultural process, i.e., a recommended performance of a act of an agricultural process. By way of example only, the guidance information may include a recommendation to begin spraying for a spraying process, to stop spraying for a spraying process, to raise a plough for a ploughing process, to lower a plough for a ploughing process, to refill a reservoir for fertilizer in a spraying process and so on. A wide variety of other suitable examples will be apparent to the skilled person once they appreciate that a reinforcement learning model can be adapted to recommend an action for performing an agricultural process.

As another example, the guidance information may indicate a recommended route for the agricultural vehicle during the performance of the one or more agricultural processes within the predetermined agricultural region. Of course, it will be appreciated that the recommended route is a form of a recommended action, in that it recommends an action to take a certain route in performing the agricultural process.

In some examples, some of which have been previously mentioned, the guidance information comprises information indicating a recommended movement or travel direction (e.g., a recommended route or a recommended travel direction). Such embodiments recognize that a reinforcement learning model is particularly suited to the complex task of route planning and/or field coverage within the naturally complex environment of an agricultural region.

In the context of the present disclosure, a guidance reinforcement learning model is a model that employs a reinforcement learning technique to generate guidance information (e.g., a recommended route and/or travel direction). Suitable examples of such models include Q-learning models, Deep Q Networks (DQN) models, Proximal Policy Optimization (PPO) models and/or Actor-Critic models. The guidance reinforcement learning model may be embodied as any one (or more) of these types of models.

In particular, the guidance reinforcement learning model may be configured to process state information, representing a (current) state of the agricultural vehicle and/or the predetermined agricultural region, to generate the guidance information. Thus, in general, the state information thereby represents the current state or context for which a future action is to be performed by the agricultural vehicle. More specifically, the state information may contain information that would affect or influence the decision(s) made by the agricultural vehicle for the performance of a future or ongoing agricultural process.

The state information may comprise environment parameters comprising one or more of field layout data, obstacle data, soil condition data, crop distribution data, terrain and/or topography data, start and end point data, weather condition data, or time restriction data.

By way of working example, the field layout data (if present) may comprise information indicating the actual geographical shape and size of the agricultural region, which may include information about the boundaries and/or dimensions of the agricultural region. Field layout data may be of particular use where the guidance information indicates a recommended route for the agricultural vehicle, e.g., with a target of performing the agricultural process(es) over a largest area of the agricultural region.

The obstacle data (if present) may comprise information indicating the size and/or position of any physical barriers within the agricultural region around which the agricultural vehicle should navigate (e.g., trees, rocks, water bodies, or infrastructure like fences or buildings).

The soil condition data (if present) may comprise information indicating any properties/variations in soil of the agricultural region, such as measures and/or areas of wetness, dryness, hardness, or different soil types. The condition(s) of the soil can influence the movement of the agricultural vehicle (e.g., its speed and/or responsiveness) and the effectiveness of agricultural tasks (e.g., an effectiveness of ploughing or planting).

The crop distribution data may (if present) indicate the distribution, type, and/or growth stage of any crops within the agricultural region. This appreciates that the properties of any crop within the agricultural region will impact or influence the most effective action to be performed in conducting the agricultural process(es), e.g., mature crops might be more susceptible to damage and is may therefore be preferably to treat said crop(s) carefully.

The terrain and/or topography data may indicate any elevation changes, slopes, or undulations in the agricultural region. Steeper terrains might benefit from the performance of different actions by the agricultural vehicle compared to flat terrain.

The state information may additionally or alternatively comprise vehicle information comprising one or more of: previous or historic coverage data (e.g., identifying any historic positions and/or ground overage of the agricultural vehicle during the performance of the agricultural process(es)); machine characteristic data (e.g., identifying the width of the vehicle or an implement connected thereto; a turning radius; a fuel capacity, other physical or operational characteristics of the agricultural machine that influence its movement and coverage capabilities); position information (identifying a position of the agricultural vehicle); a fuel level and so on.

Generally, it is conceptually possible to divide elements of state information into at least two groups, including a first group of one or more dynamic elements and a second group of one or more static elements. A static element is one that is unlikely to change (significantly) over time - particularly, in the context of the present disclosure, during the course of performing the one or more agricultural processes. Examples of static elements include terrain data, obstacle data, field layout data and so on. A dynamic element is one that is likely to change over time - particularly, in the context of the present disclosure, during the course of performing the one or more agricultural processes. Examples include position information (of the agricultural vehicle), a fuel level and so on.

The above examples of possible content for the state information are non-exhaustive, and function to demonstrate how there is a wide variety of possible data elements that can influence or define the state of the agricultural vehicle and/or the predetermined agricultural region.

For the purposes of act 210, the guidance reinforcement learning model may be obtained from a database/memory of the agricultural system, which may be communicatively coupled to the guidance system. Thus, the guidance reinforcement learning model may be a pre-trained and/or pre-configured guidance reinforcement learning model. Alternatively, as later exemplified, the guidance reinforcement learning model may be generated by the guidance system, e.g., from a base, generic or template guidance reinforcement learning model.

The method 200 also comprises a act 220 of guiding the agricultural vehicle through one or more agricultural processes in the predetermined agricultural region using the guidance reinforcement learning model.

By way of example, act 220 may effectively comprise performing a guidance process comprising a act 221 of using the guidance reinforcement learning model to generate the guidance information for performing the one or more agricultural processes; and a act 222 of using the guidance information to guide the agricultural vehicle through the one or more agricultural processes in the predetermined agricultural region.

In some examples, act 220 comprises a sub-act 223 of controlling an output user interface to provide a user-perceptible output of the guidance information. More specifically, the act 222 may comprise sub-act 223.

Thus, the agricultural system 100 (FIG. 1) may further an output user interface (not illustrated in FIG. 1), such as a display screen and/or audio output device (e.g., a speaker). The guidance system, in performing sub-act 223, may be configured to control the output user interface to provide a user-perceptiple output (e.g., a visual representation and/or audio output) of the guidance information.

Sub-act 223 thereby effectively provides a human-machine interface for facilitating the improved performance of an agricultural process, by recommending or indicating guidance for performing the agricultural process. More specifically, where the guidance information indicates an action to be taken by the agricultural vehicle, the operator is able to respond to the indicated action to more effectively perform the agricultural process.

In some examples, act 220 comprises a sub-act 224 of controlling the one or more operations of the agricultural vehicle during the one or more agricultural processes. More specifically, the act 222 may comprise sub-act 224.

Where the guidance information indicates one or more recommended actions for the agricultural vehicle, then sub-act 224 may comprise controlling the one or more operations of the agricultural vehicle to perform said one or more recommended actions.

A wide variety of possible operations for the agricultural vehicle that may be controlled in sub-act 224 will be appreciated by the skilled person, dependent at least upon the type or content of the guidance information.

For instance, where the guidance information comprises a recommended action to start/stop a sprayer, then the one or more operations may include at least an operation of an output nozzle of a spraying system (e.g., whether the output nozzle is open or closed) and/or a pump of the spraying system (e.g., whether the pump is active or not).

As another example, where the guidance comprises a recommended action to raise or lower a plough, then the one or more operations may include at least an operation of a motor configuring for raising and/or lowering the plough.

Similarly, where the guidance information indicates a recommended route for the agricultural vehicle, then sub-act 224 may comprise controlling a steering operation (i.e., a travel direction) of the agricultural vehicle. More particularly, sub-act 224 may comprise steering the travel direction of the agricultural vehicle to follow the recommended route.

Approaches for automated control or steering of an agricultural vehicle (e.g., to follow a recommended route) are known in the art, e.g., as suggested by (inter alia) Pedersen, Søren Marcus, et al. "Agricultural robots-system analysis and economic feasibility." Precision agriculture 7 (2006): 295-308 or O'Connor, Michael, et al. "Automatic steering of farm vehicles using GPS." Proceedings of the Third International Conference on Precision Agriculture. Madison, WI, USA: American Society of Agronomy, Crop Science Society of America, Soil Science Society of America, 1996.

A wide variety of other operations and operational components will be apparent to the appropriately skilled person.

The method 200 further comprises a act 230 of receiving one or more inputs of feedback grading one or more actions taken by the guidance system and/or agricultural vehicle while the guidance system guides the agricultural system through the one or more agricultural processes.

In this way, act 230 effectively comprises receiving feedback upon the performance of the agricultural vehicle during the execution of the agricultural process, e.g., the performance of one or more recommended action(s) in the guidance information. The one or more inputs of feedback may effectively data for defining a reward for the guidance reinforcement learning model.

Act 230 may comprise receiving the one or more inputs of feedback from at least one input (user) interface; at least one vehicle sensor and/or at least one region sensor. More particularly, the input (user) interface(s) may generate or provide a user input of feedback (i.e., an operator-defined input of feedback). The vehicle sensor(s) may be configured to generate vehicle sensor data identifying one or more inputs of feedback responsive to a property of the agricultural vehicle (examples of which are provided later). The region sensor(s) may be configured to generate region sensor data identifying one or more inputs of feedback responsive to a property of the predetermined agricultural region (examples of which are provided later).

Thus, the system 100 (FIG. 1) may further comprise at least one input (user) interface and/or at least one vehicle sensor and/or at least one region sensor.

A number of example inputs of feedback, any one or more of which may be employed in various embodiments, are hereafter described. The provided examples are non-exhaustive, but function to demonstrate suitable data for feedback.

The input(s) of feedback may comprise positive feedback for covering a new part of the agricultural region, negative feedback for overlapping previously covered areas of the agricultural region, negative feedback for missing areas of the agricultural region, negative or positive feedback for fuel consumption during an agricultural process, and/or negative or positive feedback for time taken to perform an agricultural process.

By way of a more specific example, the input(s) of feedback may be generated by tracking the position of the agricultural vehicle (e.g., using a GNSS system or similar). By tracking the position of the agricultural vehicle, it is possible to determine whether or not the agricultural vehicle is covering a new area of the region, overlapping previously covered areas and/or has missed areas of the agricultural region.

The above-identified example input(s) of feedback are particularly useful or relevant when employed for providing feedback for guidance information that comprises a recommended route and/or direction of the agricultural vehicle during the performance of the agricultural process(es). This is because they provide suitable constraints or targets for improving the efficiency of routing the agricultural vehicle.

A wide variety of other examples of types of input of feedback will be apparent to the appropriately skilled person in the art, to reflect a target of performing the agricultural process(es) in the agricultural region with the agricultural vehicle.

Thus, each input of feedback may effectively provide an indication of whether or not the outcome of the guidance information was beneficial (positive feedback), detrimental (negative feedback) or neutral (neutral feedback).

The method 200 further comprises a act 240 of adjusting the guidance reinforcement learning model responsive to the received one or more inputs of feedback. Thus, act 240 effectively comprises training or further training the guidance reinforcement learning model using the input(s) of feedback.

Approaches for modifying or adjusting a guidance reinforcement learning model using one or more input(s) of feedback are well known in the art. For example, once deployed, the mode of reinforcement learning is typically set, and therefore, to modify or adjust the guidance reinforcement learning model, retraining with new data is required, as would be understood by the skilled person. The adjustment or modification of the guidance reinforcement learning model can thus be understood, in some examples, to essentially comprise a re-training of said model on (at least partially) different data (e.g., new data taking into account the one or more input(s) of feedback). In another example, however, the guidance reinforcement learning model can be merely further trained on additional data (i.e., rather than entirely re-trained).

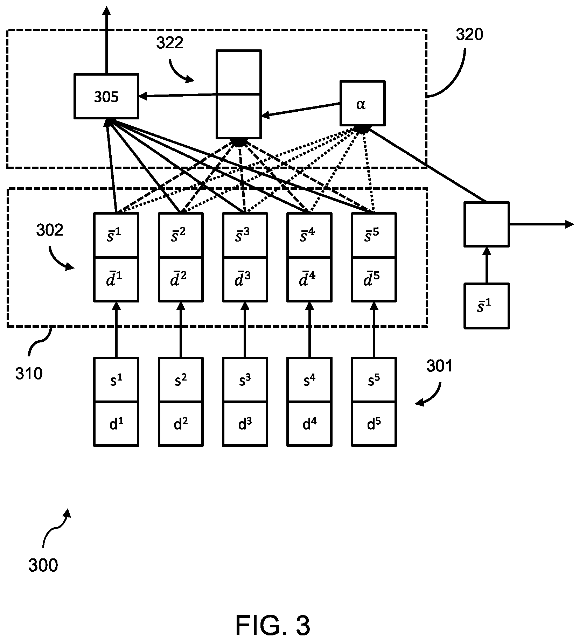

As previously explained, in the context of the present disclosure, a guidance reinforcement learning model is a model that employs a reinforcement learning technique to generate guidance information. More specifically, the guidance reinforcement learning model processes state information to generate guidance information (e.g., one or more recommended actions). A specific example of a guidance reinforcement learning model has been illustrated and described in the context of FIG. 3, later described in detail.

Although well known to the appropriately skilled person, for contextual understanding, a further description of a reinforcement learning model suitable is hereafter described. A reinforcement learning model processes state information to generate output information. The state information represents a current state of device and/or an environment of the device. The output information identifies at least one action to be taken by a device controlled by the model. The reinforcement learning model defines a policy for choosing or defining the output information (e.g., the action(s) to be taken) based on the state information (i.e., for the current state of the device and/or its environment).

In the field of reinforcement learning, training of a reinforcement learning model makes use of a reward-based training mechanism. More particularly, feedback for output information (i.e., for any action(s) taken) is provided to indicate whether or not the output information was appropriate or correct. Typically, the feedback may indicate whether the output information was "positive", "negative" or "neutral". This feedback is known as a reward. The reinforcement learning model (i.e., the policy) is modified based on the feedback/reward in an effort to improve future generation of output information, i.e., to target better rewards. In this way, the reinforcement learning model effectively learns by a trial and error approach. Approaches for modifying a reinforcement learning model are widely established in the literature and prior art.

A more detailed explanation of a reinforcement learning model is provided by, inter alia, Kaelbling, Leslie Pack, Michael L. Littman, and Andrew W. Moore. "Reinforcement learning: A survey." Journal of artificial intelligence research 4 (1996): 237-285 and/or Li, Yuxi. "Deep reinforcement learning: An overview." arXiv preprint arXiv:1701.07274 (2017).

The present disclosure proposes the adaptation of a reinforcement learning model to generate guidance information for an agricultural vehicle to perform an agricultural process.

In the proposed approach, act 230 uses one or more inputs grading the action(s) taken by the vehicle and/or guidance system, i.e., the outcome of following the guidance information, to establish or define the reward for the guidance reinforcement learning model. The model is then modified, in act 240, in an effort to improve future predictions to target an improved reward.

After performing act 240, the method may revert back to act 230.

It will be appreciated that method 200 may be repeated a plurality of times, with the same (modified) guidance reinforcement learning model being obtained in each subsequent iteration of the method 200, i.e., the model that was modified in the previous iteration. This effectively provides an approach in which it is possible to fine-tune the guidance reinforcement learning model for the specific environment or scenario in which it is employed.

Thus, in some embodiments, if method 200 is iteratively repeated, then act 210 comprises (in the second and subsequent iterations) obtaining the guidance reinforcement model that was modified by act 240 of the previous iteration. For the first iteration, act 210 may be performed using any other herein disclosed approach.

By way of example, a first set of one or more iterations of method 200 may be performed by a first party (e.g., a manufacturer of the agricultural/guidance system and/or developer of the guidance reinforcement learning model). A second set of one or more iterations of method 200 may subsequently be performed by a second party (e.g., an end-user of the agricultural/guidance system during deployment) to fine-tune the guidance reinforcement learning model to a specific use case scenario, i.e., achieve continuous learning to refine the model and adapt to changes and improve efficiency.

Of course, further iterations of the method 200 may be performed, depending upon its use and/or deployment.

FIG. 3 illustrates one example of a guidance reinforcement learning model 300 that may be employed in some embodiments, e.g., to generate the guidance information 305 from state information 201.

For the purposes of the illustrated model 300, the state information comprises a set dynamic elements d¹, d², d³, d⁴, d⁵ and a set of static elements s¹,s², s³, s⁴, s⁵.

This guidance reinforcement learning model 300 comprises an embedding portion 310 that is configured to embed or map the state information 301 to one 302 of a predetermined set of states for the guidance reinforcement learning model, i.e., select one the predetermined set of states for the guidance reinforcement learning model. Each state in the predetermined set of states may, for instance, represent a vector in a D-dimensional vector space. In this way, the guidance reinforcement learning model may be effectively configured to embed the state information in a vector space using a defined set of embeddings or embedding rules.

The guidance reinforcement learning model 300 may also comprise a mapping portion 320, also known as a decoding portion, that is configured to map the selected state 302 to guidance information 305. In other words, the embedded state information 302 (i.e., the vector-space representation of the state information) may be decoded to produce guidance information. This may be performed using a neural network, such as a recurrent neural network. In other words, the mapping portion 320 may be embodied as a neural network, such as a recurrent neural network.

In some examples, the mapping portion 320 may comprise an attention layer 322 that at least partially encodes a previous state of the guidance reinforcement learning model (e.g., an immediately previous state). This provides a context-based attention mechanism for improved accuracy in identifying appropriate outcome information. The attention layer may be a function of a recurrent neural network, although embodiments are not limited thereto.

A variable-length alignment vector α may be used to specify how each element of the selected state 302 (i.e., the embedded state information) is relevant or contributes to the decoding of a subsequent selected state (in a next iteration of using the guidance reinforcement learning model).

For the purposes of modifying the guidance reinforcement learning model illustrated by FIG 3, this modification may be performed by modifying the mapping portion 320 or decoding portion of the guidance reinforcement learning model. This ensures a consistent and repeated encoding of state information.

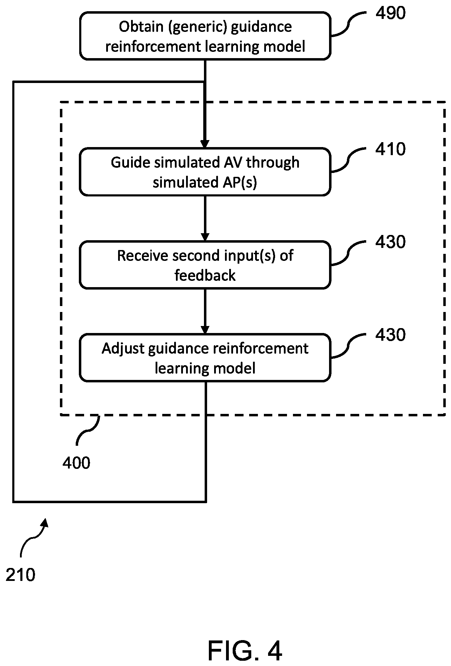

FIG. 4 is a flowchart illustrating one approach for performing act 210 (FIG. 2). In this approach, act 210 comprises training the guidance reinforcement learning model via one or more simulated agricultural processes within one or more simulated agricultural regions.

If method 200 (FIG. 2) is performed a plurality of times, then act 210 illustrates a suitable example for performing act 210 for a first iteration of the method 200, i.e., to initialize the guidance reinforcement learning model. After the first iteration, the modified guidance reinforcement learning model may be obtained for performing act 210 in subsequent iterations of the method 200.

More particularly, act 210 may comprise a training process 400 that is iteratively repeated. The training process may be performed on a generic or template guidance reinforcement learning model. Thus, act 210 may comprise obtaining 490 (e.g., from a database or the like) the generic guidance reinforcement learning model and iteratively performing the training process 400 on the generic guidance reinforcement learning model.

The training process 400 comprises a sub-act 410 of guiding a simulated agricultural vehicle (AV) through one or more simulated agricultural processes (AP(s)) in one or more simulated agricultural regions using the guidance reinforcement learning model.

The training process also comprises a sub-act 420 of receiving one or more second inputs of feedback grading one or more actions taken by the guidance system and/or the simulated agricultural vehicle while the guidance system guides the simulated agricultural system through the one or more simulated agricultural processes in the simulated region.

Each second input of feedback may be structurally and contextually the same as an input of feedback previously described, but representing an outcome or feedback of a simulated outcome (rather than a real-life outcome).

The training process 400 also comprises a sub-act 430 of adjusting the guidance reinforcement learning model responsive to the received one or more second inputs of feedback.

In this way, the guidance reinforcement learning model is trained using simulated data of the agricultural vehicle and the agricultural region.

In some examples, the one or more simulated agricultural regions comprises a simulated agricultural region modelled after the predetermined agricultural region, e.g., only the simulated agricultural region modelled after the predetermined agricultural region. In this way, the simulated agricultural region is adapted or designed to virtually resemble or represent the predetermined agricultural region.

It will be understood that disclosed methods are preferably computer-implemented methods. As such, there is also proposed the concept of a computer program comprising code means for implementing any described method when said program is run on at least one processor of a guidance system, such as a computer. Thus, different portions, lines or blocks of code of a computer program according to an embodiment may be executed by at least one processor of a guidance system or computer to perform any herein described method.

A computer program may be stored on a non-transitory computer-readable medium, itself an embodiment of the disclosure. A "computer-readable medium" is any suitable mechanism or format that can store a program for later processing by at least one processor of a guidance system. The computer readable medium can be, for example but not limited to, an electronic, magnetic, optical, electromagnetic, infrared, or semiconductor system, apparatus or device. The computer-readable medium is preferably non-transitory.

In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing the embodiments of the disclosure, from a study of the drawings, the disclosure and the appended claims. In the claims, the word "comprising" does not exclude other elements or acts, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa. Any reference signs in the claims should not be construed as limiting the scope.

All references cited herein are incorporated herein in their entireties. If there is a conflict between definitions herein and in an incorporated reference, the definition herein shall control.

## Claims

1. An agricultural system, comprising:
an agricultural vehicle; and
a guidance system configured to control one or more operations of the agricultural vehicle and comprising:
at least one processor; and
at least one non-transitory computer-readable storage medium storing instructions thereon that, when executed by the at least one processor, cause the guidance system to:
obtain a guidance reinforcement learning model configured to generate guidance information for guiding the agricultural vehicle through one or more agricultural processes in a predetermined agricultural region;
guide the agricultural vehicle through one or more agricultural processes in the predetermined agricultural region using the guidance reinforcement learning model;
receive one or more inputs of feedback grading one or more actions taken by the guidance system and/or the agricultural vehicle while the guidance system guides the agricultural system through the one or more agricultural processes; and
adjust the guidance reinforcement learning model responsive to the received one or more inputs of feedback.

2. The agricultural system of claim 1, wherein the instructions are configured to, when executed by the at least one processor, cause the guidance control system to guide the agricultural vehicle through the one or more agricultural processes in the predetermined agricultural region by performing a guidance process comprising:
using the guidance reinforcement learning model to generate the guidance information for performing the one or more agricultural processes; and
using the guidance information to guide the agricultural vehicle through the one or more agricultural processes in the predetermined agricultural region.

3. The agricultural system of claim 2, further comprising an output user interface, wherein the guidance process comprises controlling the output user interface to provide a user-perceptible output of the guidance information; optionally wherein the output user interface comprises an output display and the user-perceptible output comprises a visual representation of the guidance information.

4. The agricultural system of any one of claims 2 to 3, wherein the guidance process comprises controlling the one or more operations of the agricultural vehicle during the one or more agricultural processes.

5. The agricultural system of any one of claims 1 to 4, wherein the one or more operations comprises at least a steering operation of the agricultural vehicle.

6. The agricultural system of any one of claims 1 to 5, wherein the guidance information indicates one or more recommended actions for the agricultural vehicle.

7. The agricultural system of any one of claims 1 to 6, wherein the guidance reinforcement learning model is configured to process state information, representing a state of the agricultural vehicle and/or the predetermined agricultural region, to generate the guidance information; optionally wherein the state information comprises environment parameters comprising one or more of field layout data, obstacle data, soil condition data, crop distribution data, terrain and/or topography data, start and end point data, weather condition data, or time restriction data.

8. The agricultural system of claim 7, wherein the state information comprises vehicle information comprising one or more of: previous coverage data; machine characteristic data; position information; historic position information and/or a fuel level.

9. The agricultural system of any one of claims 1 to 8, wherein the guidance reinforcement learning model comprises at least one of a Q-learning model, a Deep Q Networks model, a Proximal Policy Optimization model and/or an Actor-Critic model.

10. The agricultural system of any one of claims 1 to 9, wherein the instructions are configured to, when executed by the at least one processor, cause the guidance control system to obtain the guidance reinforcement learning model by performing a training process comprising training the guidance reinforcement learning model via one or more simulated agricultural processes within one or more simulated agricultural regions.

11. The agricultural system of claim 10, wherein the training process comprises performing one or more iterations of:
guiding a simulated agricultural vehicle through one or more simulated agricultural processes in one or more simulated agricultural regions using the guidance reinforcement learning model;
receiving one or more second inputs of feedback grading one or more actions taken by the guidance system and/or the simulated agricultural vehicle while the guidance system guides the simulated agricultural system through the one or more simulated agricultural processes in the simulated region; and
adjusting the guidance reinforcement learning model responsive to the received one or more second inputs of feedback; optionally wherein the one or more simulated agricultural regions comprises a simulated agricultural region modelled after the predetermined agricultural region.

12. The agricultural system of any one of claims 1 to 11, wherein the one or more inputs of feedback comprises one or more of: positive feedback for covering a new part of the agricultural region, negative feedback for overlapping previously covered areas of the agricultural region, negative feedback for missing areas of the agricultural region, negative or positive feedback for fuel consumption during an agricultural process, and/or negative or positive feedback for time taken to perform an agricultural process.

13. The agricultural system of any one of claims 1 to 12, further comprising one or more of: at least one input interface for receiving at least one input of feedback; at least one vehicle sensor for generating vehicle sensor data identifying one or more inputs of feedback responsive to a property of the agricultural vehicle; and/or at least one region sensor for generating region sensor data identifying one or more inputs of feedback responsive to a property of predetermined agricultural region.

14. The agricultural system of any one of claims 1 to 13, wherein the guidance information indicates a recommended route for the agricultural vehicle during the performance of the one or more agricultural processes within the predetermined agricultural region.

15. A computer-implemented method for guiding an agricultural vehicle through one or more agricultural processes in a predetermined agricultural region, the computer-implemented method comprising:
obtaining a guidance reinforcement learning model configured to generate guidance information for guiding the agricultural vehicle through the one or more agricultural processes in the predetermined agricultural region;
guiding the agricultural vehicle through one or more agricultural processes in the predetermined agricultural region using the guidance reinforcement learning model;
receiving one or more inputs of feedback grading one or more actions taken by the guidance system and/or the agricultural vehicle while the guidance system guides the agricultural system through the one or more agricultural processes; and
adjusting the guidance reinforcement learning model responsive to the received one or more inputs of feedback.
